# EUROPÄISCHE PATENTSCHRIFT

(11) **EP 0 346 688 B1**
(45) Veröffentlichungstag und Bekanntmachung des Hinweises auf die Patenterteilung: **11.05.1994**
(21) Anmeldenummer: 89109867.5
(22) Anmeldetag: 31.05.1989
(51) Int. Cl.: G01N 29/00, G01N 29/04, G21C 17/00

(54) **Ultraschallsonde zur Prüfung von U-Rohren eines Wärmetauschers**
Ultrasonic sensor for testing U-tubes in a heat exchanger
Sonde ultrasonore pour le contrôle de tubes en U dans un échangeur de chaleur

(30) Priorität: 15.06.1988 DE 3820422
(43) Veröffentlichungstag der Anmeldung: 20.12.1989
(73) Patentinhaber: SIEMENS AKTIENGESELLSCHAFT, 80333 München (DE)
(72) Erfinder: Adams, Helmar, D-8520 Erlangen (DE); Hertel, Peter, D-8524 Neunkirchen a. B. (DE); Jacob, Heinz, D-8602 Memmeldorf (DE)

(56) Entgegenhaltungen:
- EP-A- 0 086 341
- EP-A- 0 276 819
- EP-A- 0 301 906
- US-A- 4 241 609
- US-A- 4 586 380
- US-A- 4 612 808

## Beschreibung

Die Erfindung bezieht sich auf eine Ultraschallsonde zur Prüfung von Rohren eines Wärmetauschers mit einem U-Rohrbündel, wie sie beispielsweise in Dampferzeugern von Kernkraftwerken eingesetzt werden.

Aus der EP-A-0 086 341 ist eine Ultraschallsonde zur zerstörungsfreien Prüfung von zylindrischen Hohlräumen bekannt, bei der ein rotierender Prüfkopf vorgesehen ist, welcher einerseits in einer Führungsspitze und andererseits in einer zylindrischen starren Hülse drehbar gelagert ist. Der Prüfkopf umfaßt einen Haltekörper, der in einer radial, d.h. quer zur Längsachse der Sonde verlaufenden Bohrung einen Ultraschallschwinger enthält. Dieser Ultraschallschwinger ist in der Bohrung in radialer Richtung verschiebbar angeordnet und mit einer Schraube festgeklemmt. Über einen durch die Sonde geführten Schlauch wird dem Ultraschallschwinger eine Ankopplungsflüssigkeit zugeleitet. Als Antrieb für den rotierenden Prüfkopf dient ein Elektromotor mit Untersetzungsgetriebe, der innerhalb der starren zylindrischen Hülse der Sonde untergebracht ist. An die Hülse schließt sich ein Führungsteil mit einem Abdichtungskörper an, an dem ein Schubschlauch befestigt ist. Dem Schubschlauch ist eine Schubvorrichtung zugeordnet, mit der die Sonde in das zu prüfende Rohr des Wärmetauschers eingeschoben wird.

Mit dieser bekannten Ausführung der Ultraschallsonde können nur gerade Rohrteile des Rohrbündels eines Wärmetauschers geprüft werden. Die Ultraschallsonde kann nicht in den Bogenbereich der Rohre eines Rohrbündels eingeführt werden.

Der Erfindung liegt die Aufgabe zugrunde, eine einfach ausgebildete Vorrichtung zur Ultraschallprüfung anzugeben, mit der Ultraschall-Messungen auch im Bogenbereich eines U-Rohres durchgeführt werden können.

Diese Aufgabe wird erfindungsgemäß durch eine Ultraschallsonde zur Prüfung von Rohren eines Wärmetauschers mit einem U-förmigen Rohrbündel gelöst, bei der eine einen Ultraschallschwinger enthaltende Prüfkopfeinheit an zwei gegenüberliegenden Seiten an je eine biegsame Hohlwelle angeschlossen ist, wobei die eine Hohlwelle in einer Führungsspitze und die andere Hohlwelle in einer zylinderischen Hülse drehbar gelagert und mit einer elektrischen Antriebseinheit drehmomentschlüssig verbunden ist, wobei an der zylindrischen Hülse ein Abdichtungskörper für eine zur Ankopplung des Ultraschallschwingers dienende Flüssigkeit und ein Schubschlauch angeschlossen sind und die biegsamen Hohlwellen in vorgegebenen axialen Abständen mit Abstützungen versehen sind.

Auf diese Weise können die Antriebskräfte, die für die Drehbewegung des Prüfkopfes im Bereich des Rohrbogens aufgebracht werden müssen, klein gehalten werden, so daß ein in der Sonde untergebrachter Elektromotor trotz der kleinen Motorabmessungen zum Antrieb des Prüfkopfes eingesetzt werden kann.

Die Ankopplungsflüssigkeit tritt - in Einschubrichtung der Sonde gesehen hinter dem Abdichtungskörper der Hülse aus und füllt den Raum zwischen der Innenwandung des zu untersuchenden Rohres und der Sondenoberfläche aus, so daß auch ein gutes Gleiten der Abstützungen gewährleistet ist. Um zu vermeiden, daß beim Übergang der Führungsspitze im Rohrbogen von der nach oben gerichteten Lage in die nach unten gerichtete Lage die Ankopplungsflüssigkeit ausläuft, ist zusätzlich zu dem an der zylindrischen Hülse angeordneten Abdichtungskörper auch am Außenumfang der Führungsspitze ein Abdichtungskörper angeordnet.

Eine weitere Verbesserung der Gleiteigenschaften der Sonde und damit eine Verringerung der Antriebskräfte ist dadurch erzielbar, daß an der Führungsspitze eine Auslaßöffnung für die zur Ankopplung des Ultraschallschwingers dienende Flüssigkeit angeordnet ist. Durch diese Ausbildung werden beim Einführen der Sonde in das zu prüfende Rohr die Führungsspitze und die dem Prüfkopf vorgeordneten Abstützungen benetzt, so daß diese Teile leichter gleiten.

Es ist günstig, die Abstützungen als Gleitringe auszubilden.

Besonders vorteilhaft ist es, die Abstützungen durch Ringe zu bilden, die über Kugellager an den biegsamen Hohlwellen gelagert sind. Dadurch wird die Reibung der Sonde an der Rohrinnenwand auf ein Minimum herabgesetzt, so daß die Antriebskraft für die Motoreinheit besonders klein gehalten werden kann.

Die an der Führungsspitze vorgesehene Auslaßöffnung für die Flüssigkeit zur Ankopplung des Ultraschallschwingers besitzt in vorteilhafter Weise ein Sperrventil, das derart ausgebildet ist, daß unter Ausnutzung der Schwerkraft die Auslaßöffnung zu dem zu prüfenden Rohr freigegeben wird, solange die Führungsspitze der Ultraschallsonde eine nach oben gerichtete Lage einnimmt und die Auslaßöffnung gesperrt wird, wenn die Führungsspitze in eine nach unten gerichtete Lage gelangt. Dadurch wird beim Übergang der Führungsspitze von der nach oben gerichteten Lage in die nach unten geneigte Lage vermieden, daß die zur Ankopplung des Ultraschallschwingers dienende Flüssigkeit aus dem zu prüfenden Rohr ausläuft.

Um im Bogenbereich eine gute Anpassung des Prüfkopfes an die Krümmung der Innenrohrwandung zu erzielen, ist es zweckmäßig, den Ultraschallkopf an einem Haltekörper kardanisch aufzuhängen.

Es ist günstig, die biegsame Hohlwelle aus einem gewendelten Federdraht zu bilden, dessen Windungen gegeneinander radial verzahnt sind.

Ein Ausführungsbeispiel der Erfindung ist in der Zeichnung dargestellt. Es zeigen:
- FIG 1: einen Längsschnitt durch eine Ultraschallsonde in vergrößertem Maßstab und
- FIG 2: eine Ansicht einer Ultraschallsonde.

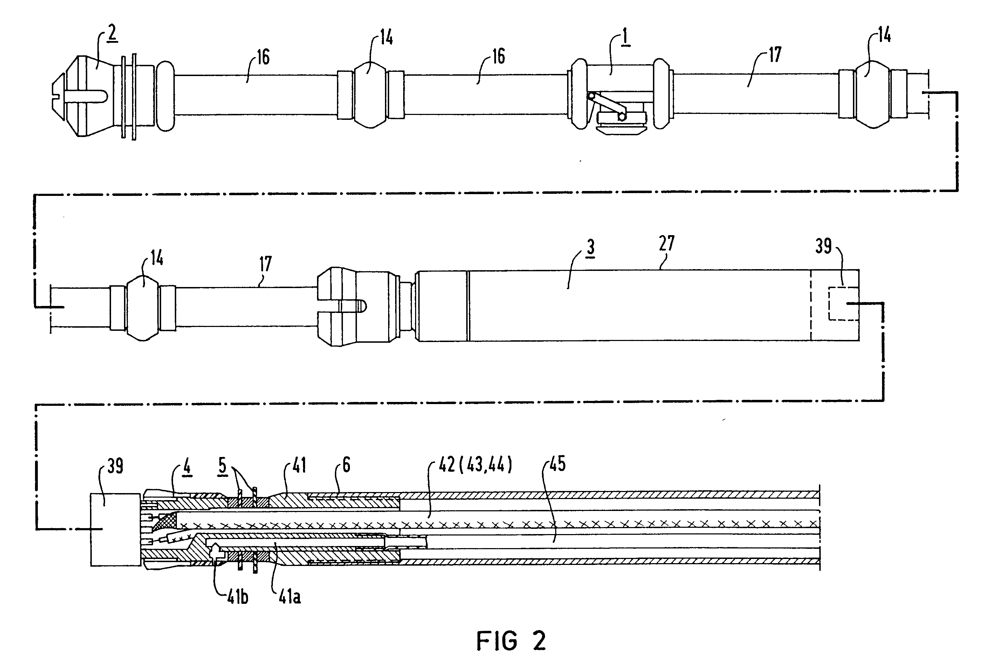

Die in FIG 2 gezeigte Ultraschallsonde besitzt eine Prüfkopfeinheit 1, welche an zwei gegenüberliegenden Seiten über je eine biegsame Hohlwelle 16 bzw. 17 einerseits in einer Führungsspitze 2 und andererseits in einer Antriebs- und Signalübertragungseinheit 3 drehbar gelagert ist. An den biegsamen Hohlwellen 16, 17 sind in vorgegebenen axialen Abständen Abstützungen 14 angeordnet.

An die Antriebs- und Signalübertragungseinheit 3 schließt sich ein Führungsteil 4 mit einem Abdichtungskörper 5 an, an dem ein Schubschlauch 6 befestigt ist. Mittels dieses Schubschlauches 6 wird die Sonde in ein Rohr eines Wärmetauschers eingeschoben. Hierzu dient eine an sich bekannte Schubvorrichtung.

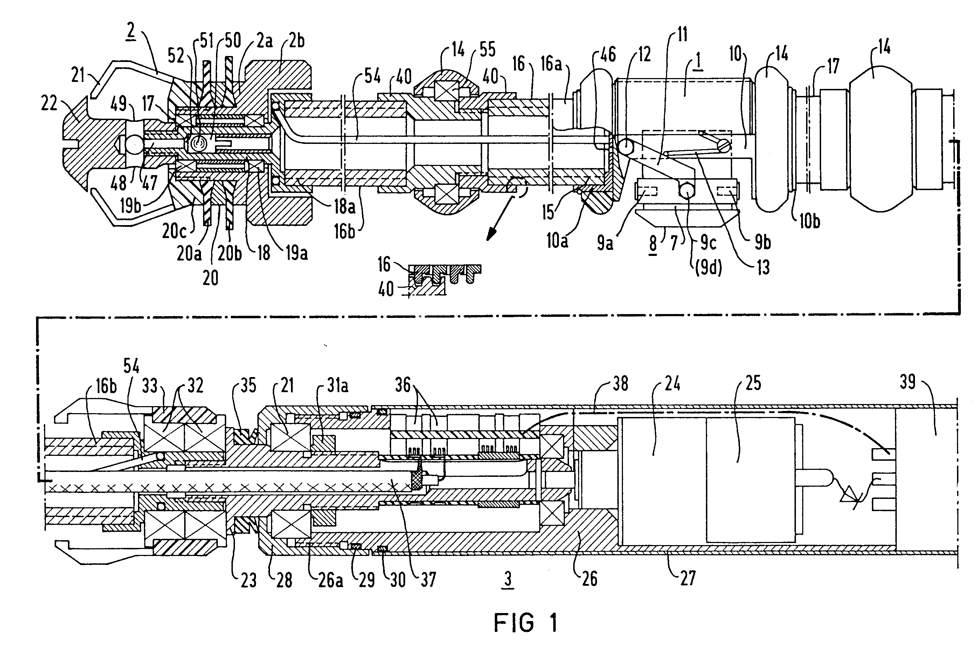

Wie FIG 1 in einem Längsschnitt zeigt, besitzt die Prüfkopfeinheit 1 einen Halter 10 für einen Prüfkopf 8 mit Ultraschallschwinger 7. Er ist über Lagerzapfen 9a, 9b, 9c, 9d in zwei zueinander senkrechten Achsen beweglich, also kardanisch aufgehängt. Dabei sind die Lagerzapfen 9a bis 9d über zwei parallele Schwinghebel 11 und Gelenke 12 an dem Kalter 10 aufgehängt. Eine am Halter 10 befestigte Feder 13 drückt den Prüfkopf 8 über den Schwinghebel 11 an die Innenwand des zu prüfenden Rohres.

Der Halter 10 ist an seinen beiden Seiten mit Ansätzen 10a, 10b versehen, an denen Abstützungen 14 befestigt sind, die durch Gleitringe gebildet sind. Der Ansatz 10a hat ein Innengewinde 15, in das ein Ende 16a einer biegsamen Hohlwelle 16 eingedreht ist. Die Hohlwelle 16 ist mit einer oder mehreren Abstützungen 14 versehen. Das andere Ende 16b der biegsamen Hohlwelle 16 ist in ein Innengewinde 18a eines Wellenzapfens 18 eingedreht, der über zwei Kugellager 19a, 19b in dem Mantel 2a der Führungsspitze 2 drehbar angeordnet ist. Der Mantel 2a trägt einen zur Abstützung im Rohr dienenden Bund 2b und einen Abdichtungskörper 20, der durch zwei Gummischeiben 20a, 20b gebildet ist, welche durch eine Schraubkappe 20c gehalten sind. An dieser sind zum Endstück der Führungsspitze 2 hin abgebogene elastische Führungszungen 21 angeordnet. Das Endstück 22 ist kegelstumpfförmig ausgebildet und auf den Wellenzapfen 18 aufgeschraubt.

Auf der Antriebsseite hat der Halter 10 des Prüfkopfes 8 einen Ansatz 10b mit Innengewinde 15, in das ebenfalls eine elastische Hohlwelle 17 eingeschraubt ist. Diese Hohlwelle 17 ist unter Zwischenschaltung mehrerer Abstützungen 14 (nicht dargestellt) und eines hohlen Wellenzapfens 23 mit einer Signalübertragungseinheit und einer aus einem Untersetzungsgetriebe 24 und einem Elektromotor 25 bestehenden Antriebseinheit 3 drehmomentschlüssig verbunden. Die Antriebs- und Signalübertragungseinheit 3 ist an einem Schalenkörper 26 angeordnet, an dem auch der Wellenzapfen 23 über ein Kugellager 21 gelagert ist. Der Schalenkörper 26 ist von einer Hülse 27 umschlossen und mit dieser lösbar verbunden. Das dem Prüfkopf zugekehrte Ende des Schalenkörpers 26 trägt eine Haube 28, die auf ein Gewinde 26a des Schalenkörpers 26 aufgeschraubt ist. Zur Abdichtung sind zwischen der Hülse 27 und dem Schalenkörper 26 bzw. zwischen Haube 28 und Schalenkörper 26 Ringdichtungen 29, 30 eingesetzt. Das Kugellager 21 ist mit einer Ringmutter 31a auf dem Wellenzapfen 23 festgelegt.

Außerhalb der Haube 28 ist auf dem Wellenzapfen 23 ein Doppelwälzlager 32 angeordnet, dessen äußerer Lagerkörper 33 mit fingerförmigen elastischen Lamellen 34 zur Abstützung der Antriebseinheit 3 an dem zu untersuchenden Rohr versehen ist. Ferner ist zwischen der Haube 28 und dem Doppelwälzlager 32 eine V-Ringdichtung 35 angeordnet, die den Innenraum der Antriebseinheit gegen das Eindringen der Ankopplungsflüssigkeit abdichtet. In diesem Innenraum sind zwischen der Ringmutter 31 und dem Kugellager 21 verschiedene Schleifkontakte 36 angeordnet, mit denen die über Kabel 37 übertragenen elektrischen Signale des Ultraschallschwingers auf feststehende Anschlußleitungen 38 übertragen werden und zu einem Stecker 39 (FIG 2) am Ende des Schalenkörpers 26 führen. Weitere Leitungen 40 sind unter Zwischenschaltung einer Diode vom Elektromotor 25 zu dem Stecker 39 geführt. Zum Stecker 39 gehört ein Bajonettverschluß, um eine leicht lösbare mechanische und elektrische Verbindung zwischen der Antriebseinheit 3 und der Führungsteil 4 zu erzielen (FIG 2).

In dem mittels eines Anschlußkörpers 41 über den Abdichtungskörper 5 an den Führungsteil 4 angeschlossenen Schubschlauch 6 ist für die Übertragung der elektrischen Signale des Ultraschallschwingers ein Koaxialkabel 42 vorgesehen. Ein weiteres Kabel 43 dient für die Spannungsversorgung des Motors, der mit Gleichstrom betrieben wird. Ein anderes Kabel 44 überträgt Signale, aus denen die Drehzahl und Winkelstellung des Prüfkopfes abgeleitet werden.

Im Schubschlauch 6 ist ferner ein Schlauch 45 untergebracht, der bis zum Führungsteil 4 geführt ist und zum Zuführen der für die Ankopplung des Schwingers dienenden Flüssigkeit, z.B. Wasser dient. Der im Anschlußkörper vorgesehene Kanal 41a, in den der Schlauch eingeführt ist, ist mit Austrittsöffnungen 41b versehen, so daß die Ankopplungsflüssigkeit über den durch die Innenwand des zu untersuchenden Rohres, durch die Scheiben des Dichtkörpers 5 sowie den durch die Hülse abgegrenzten Raum zum Ultraschallschwinger 7 und weiter bis zu den Gummischeiben 20a, 20b der Führungsspitze 2 gelangen kann.

Wie FIG 1 zeigt, hat der drehbare Teil der Hohlwelle 16a oder der Wellenzapfen 18 bzw. der Halter 10 eine von außen nach innen führende Öffnung 46, durch die Ankopplungsflüssigkeit in den Hohlraum des Wellenzapfens 18 gelangen kann. Von dort führt eine Bohrung 47 zum Endstück 22 der Führungsspitze 2, die mit Auslaßöffnungen 48, 49 zu den abgewinkelten Lamellen 21 versehen sind.

Diesen Auslaßöffnungen ist ein im Hohlraum des Wellenzapfens 18 angeordnetes Sperrventil 50 vorgeschaltet, das derart ausgebildet ist, daß unter Ausnutzung der Schwerkraft der Ventilauslaß zu dem zu prüfenden Rohr freigegeben wird, solange die Führungsspitze 2 der Ultraschallsonde einen nach oben gerichtete Lage einnimmt und der Ventilauslaß gesperrt wird, wenn die Führungsspitze 2 in einen nach unten gerichtete Lage gelangt. Dadurch werden beim Einführen der Sonde in den nach oben gerichteten Bogenteil eines zu prüfenden Rohres die zur Führung dienenden abgebogenen Lamellen 21 an der Führungsspitze 2 und die Dichtringe 20a, 20b mit Flüssigkeit benetzt, so daß die Sonde leichter gleitet. Beim Übergang der Führungsspitze 2 von der nach oben gerichteten Lage im Rohr in die nach unten geneigten Lage schließt das Sperrventil 50, so daß ein Auslaufen der Ankopplungsflüssigkeit aus der Führungsspitze 2 vermieden wird. Das Sperrventil 50 kann in einfacher Weise als Kugelventil mit einem Dichtsitz 52 ausgebildet sein, wobei dann, wenn die Führungsspitze 2 in eine nach unten geneigte Lage gelangt, unter Ausnutzung der Schwerkraft die Kugel 51 am Dichtsitz 52 aufliegt und einen Durchfluß der Flüssigkeit sperrt. In der anderen Stellung der Führungsspitze nimmt die Kugel 51 eine Lage ein, in der der Durchtritt der Flüssigkeit freigegeben ist.

Es ist günstig, die Hohlwellen 16 und 17 aus Hohlwellenteilen zu bilden und diese unter Zwischenschaltung der Abstützungen 14 zusammenzufügen.

Die biegsamen Hohlwellen 16, 17 bestehen vorzugsweise aus einem gewendelten Federdraht 53, dessen Windungen gegeneinander verzahnt sind. Sie haben wendelförmige Rippen 53a, die ein Außengewinde bilden. Die Abstützungen 14 besitzen an beiden Enden ringförmige Ansätze 40, die mit einem Innengewinde 40a versehen sind, so daß die Hohlwellen 16, 17 bzw. -teile in die Abstützungen eingeschraubt und befestigt werden können. Zweckmäßigerweise sind die Abstützungen 14 durch Ringe gebildet, die über Kugellager 55 an den biegsamen Hohlwellen 16, 17 bzw. Hohlwellenteilen gelagert sind. Durch die Sonde ist ein Seil 54 geführt, das an der Führungsspitze 2 verankert ist und zum Herausziehen der gesamten Sonde aus dem zu prüfenden Rohr dient. An der Einbaustelle des Ultraschallschwingers 7 ist das Seil 54 um den kardanisch aufgehängten Kopf heraumgeführt.

## Patentansprüche

1. Ultraschallsonde zur Prüfung von Rohren eines Wärmetauschers mit einem U-förmigen Rohrbündel, bei der eine einen Ultraschallschwinger (7) enthaltende Prüfkopfeinheit (1) an zwei gegenüberliegenden Seiten an je eine biegsame Hohlwelle (16, 17) angeschlossen ist, wobei die eine Hohlwelle (16) in einer Führungsspitze (2) und die andere Hohlwelle (17) in einer zylinderischen Hülse (27) drehbar gelagert und mit einer elektrischen Antriebseinheit (3) drehmomentschlüssig verbunden ist, wobei an der zylindrischen Hülse (27) ein Abdichtungskörper (5) für eine zur Ankopplung des Ultraschallschwingers (7) dienende Flüssigkeit und ein Schubschlauch (6) angeschlossen sind und die biegsamen Hohlwellen (16, 17) in vorgegebenen axialen Abständen mit Abstützungen (14) versehen sind.

2. Ultraschallsonde nach Anspruch 1, bei der auch am Außenumfang der Führungsspitze (2) ein Abdichtungskörper (20) angeordnet ist.

3. Ultraschallsonde nach Anspruch 2, bei der an der Führungsspitze (2) mindestens eine Auslaßöffnung (48, 49) für die Ankopplungsflüssigkeit angeordnet ist.

4. Ultraschallsonde nach einem der Ansprüche 1 bis 3, bei der die Abstützungen (14) durch Gleitringe gebildet sind.

5. Ultraschallsonde nach Anspruch 1, bei der die Abstützungen (14) durch Ringe gebildet sind, die über Kugellager (55) an den biegsamen Hohlwellen (16, 17) gelagert sind.

6. Ultraschallsonde nach einem der vorhergehenden Ansprüche, bei der der an der Führungsspitze (2) vorgesehenen Auslaßöffnung für die Flüssigkeit zur Ankopplung des Ultraschallschwingers (7) ein Sperrventil (50) vorgeschaltet ist, das derart ausgebildet ist, daß unter Ausnutzung der Schwerkraft der Ventilauslaß zu dem zu prüfenden Rohr freigegeben wird, solange die Führungsspitze (2) der Ultraschallsonde eine nach oben gerichtete Lage einnimmt und der Ventilauslaß gesperrt wird, wenn die Führungsspitze (2) in eine nach unten gerichtete Lage gelangt.

7. Ultraschallsonde nach einem der vorhergehenden Ansprüche, bei der der Ultraschallschwinger (7) an einem Halter (10) kardanisch aufgehängt ist.

8. Ultraschallsonde nach einem der vorhergehenden Ansprüche, bei der die biegsamen Hohlwellen (16, 17) aus einem gewendelten Federdraht (53) bestehen, dessen Windungen gegeneinander verzahnt sind.

## Claims

1. An-ultrasonic sensor for testing tubes of a heat exchanger having a U-shaped bundle of tubes, in which a test head unit (1), containing an ultrasonic oscillator (7), is connected at two opposing sides to, in each case, a flexible hollow shaft (16, 17), wherein one hollow shaft (16) is able to be rotated in a guide tip (2) and the other hollow shaft (17) is able to be rotated in a cylindrical sleeve (27) and is connected to an electric drive unit (3) in such a manner as to conduct rotary momentum with there being connected to the cylindrical sleeve (27) a sealing body (5) for a liquid serving to couple the ultrasonic oscillator (7) and a pusher tube (6) and with the flexible hollow shafts (16, 17) being provided with supports (14) at predetermined axial intervals.

2. An ultrasonic sensor according to claim 1, in which a sealing body (20) is also arranged on the outer periphery of the guide tip (2).

3. An ultrasonic sensor according to claim 2, in which at least one outlet opening (48, 49) for the coupling liquid is arranged on the guide tip (2).

4. An ultrasonic sensor according to one of claims 1 to 3, in which the supports (14) are formed by slide rings.

5. An ultrasonic sensor according to claim 1, in which the supports (14) are formed by rings which are mounted on the flexible hollow shafts (16, 17) by way of ball bearings (55).

6. An ultrasonic sensor according to one of the preceding claims, in which a blocking valve (50) for the liquid for coupling the ultrasonic oscillator (7), is connected before the outlet opening provided on the guide tip (2), said valve being formed such that, by utilising the force of gravity, the valve outlet to the tube to be tested is unblocked as long as the guide tip (2) of the ultrasonic sensor assumes a position directed upwardly and the valve outlet is blocked when the guide tip (2) reaches the position pointing downwards.

7. An ultrasonic sensor according to one of the preceding claims, in which the ultrasonic oscillator (7) is suspended cardanically on a holder (10).

8. An ultrasonic sensor according to one of the preceding claims, in which the flexible hollow shafts (16, 17) consist of a helically wound spring wire (53), the windings of which are mutually interlocked.

## Revendications

1. Sonde à ultrasons pour le contrôle de tubes d'un échangeur de chaleur comportant un faisceau de tubes en forme de U, dans laquelle une unité formant tête de contrôle (1), qui comporte un vibreur à ultrasons (7) est raccordée, sur deux côtés opposés, à des arbres creux (16, 17) flexibles respectifs, un arbre creux (16) étant monté rotatif dans une pointe de guidage (2) tandis que l'autre arbre creux (17) est monté rotatif dans une douille cylindrique (27) et est relié, selon une liaison de transmission du couple, à une unité d'entraînement électrique (3), une garniture d'étanchéité (5) pour un liquide servant à coupler le vibreur à ultrasons (7) et un tuyau (6) souple emmanchable étant raccordés à la douille cylindrique (7), et les arbres creux (16, 17) flexibles sont munis de portées (14), à des distances axiales prescrites.

2. Sonde à ultrasons suivant la revendication 1, dans laquelle une garniture d'étanchéité (20) est également prévue sur le pourtour extérieur de la pointe de guidage (2).

3. Sonde à ultrasons suivant la revendication 2, dans laquelle au moins une ouverture de sortie (48, 49) pour le liquide de couplage est prévue la pointe de guidage (2).

4. Sonde à ultrasons suivant l'une des revendications 1 à 3, dans laquelle les portées (14) sont formées par des bagues de glissement.

5. Sonde à ultrasons suivant la revendication 1, dans laquelle les portées (14) sont formées par des bagues, qui sont montées au moyen de roulements à billes (55) sur les arbres creux (16, 17) flexibles.

6. Sonde à ultrasons suivant l'une des revendications précédentes, dans laquelle en amont de l'ouverture de sortie, prévue sur la pointe de guidage (2) et destinée au liquide de couplage du vibreur liquide est montée, une vanne d'arrêt (50), telle que sous l'effet de la force de pesanteur, la sortie de la vanne en direction du tube à contrôler est dégagée tant que la pointe de guidage (2) de la sonde ultrasonore prend une position pointant vers le haut, et que la sortie de la vanne est fermée lorsque la pointe de guidage (2) arrive à une position pointant vers le bas.

7. Sonde à ultrasons suivant l'une des revendications précédentes, dans laquelle le vibreur à ultrasons (7) est monté à la cardan sur un support (10).

8. Sonde à ultrasons suivant l'une des revendications précédentes, dans laquelle les arbres creux (16, 17) flexibles sont constitués d'un fil hélicoïdal pour ressort (53), dont les spires sont imbriquées les unes dans les autres.
